# EUROPEAN PATENT APPLICATION

(11) **EP 3 147 515 A1**
(43) Date of publication of application: **29.03.2017**
(21) Application number: 15841134.8
(22) Date of filing: 08.09.2015
(51) Int. Cl.: F04D 29/42, F04D 29/66

(54) **ROTARY MACHINE**

(30) Priority: 19.09.2014 JP 2014191015
(71) Applicant: Mitsubishi Heavy Industries, Ltd., Tokyo 108-8215 (JP); Mitsubishi Heavy Industries Compressor Corporation, Minato-ku Tokyo 108-0014 (JP)
(72) Inventor: NAGAI Naoyuki, Tokyo 108-8215 (JP); SATO Takashi, Tokyo 108-8215 (JP)
(74) Representative: Studio Torta S.p.A.
(86) International application number: PCT/JP2015/075430
(87) International publication number: WO 2016/043090

(57) **Abstract**

A centrifugal compressor includes an impeller (40) fixed to a rotary shaft (30), and a casing accommodating the impeller (40). The impeller (40) includes a disc-shaped disc portion (41), a plurality of blade portions (42) provided to be separated from one another in a circumferential direction, and a cover portion (43) facing the disc portion (41) with a gap interposed therebetween and covering the plurality of blade portions (42) from one of two sieds in the axial direction. The casing includes a perforated face (60A), which faces the cover portion (43) with a gap interposed therebetween, is provided at an inner peripheral side area in relation to an outer peripheral side end (43c) of the cover portion (43), and is provided with a plurality of holes (61).

## Description

### [Technical Field]

The present invention relates to a rotary machine such as a centrifugal compressor.

Priority is claimed on Japanese Patent Application No. 2014-191015, filed September 19, 2014, the content of which is incorporated herein by reference.

### [Background Art]

As a kind of a rotary machine, a centrifugal compressor for compressing a gas is widely known. The centrifugal compressor includes an impeller provided inside a casing. The centrifugal compressor compresses a hydraulic fluid such as a gas flowing from a suction port by rotation of the impeller and discharges the hydraulic fluid from a discharge port.

In a rotary machine like a centrifugal compressor, a gap generally exists between a rotating body such as a rotary shaft and a stationary body such as a peripheral casing. For that reason, in many cases, a sealing device which suppresses an inflow of a hydraulic fluid is provided in the gap between the rotating body and the stationary body. In the case of a centrifugal compressor, a metal port seal is provided at a metal port of an inlet of the impeller, an intermediate seal is provided among multiple stages of impellers, and a balance piston is provided at a final stage. Accordingly, the amount of leakage of a gas compressed by the impeller is reduced. As such, various seals, for example, a damper seal or a labyrinth seal, are used.

A labyrinth seal is formed such that a plurality of protruding portions are disposed to protrude from an annular stationary member, which faces a rotating rotary shaft with a gap interposed therebetween, toward the rotary shaft. Since a labyrinth seal causes a loss of pressure of a fluid flowing near a front end of the protruding portion, the leakage of the fluid can be reduced.

As a damper seal, a honeycomb seal or a hole pattern seal is known. For example, a hole pattern seal is formed such that a plurality of holes are formed in an opposite face that faces a rotary shaft in an annular stationary member that faces the rotary shaft with a gap interposed therebetween. A hole pattern seal can reduce leakage of a fluid by a loss of pressure generated in a hole (for example, see Patent Document 1).

A hole pattern seal is better than a labyrinth seal in that a damping effect is large and the vibration of a rotary shaft is stabilized. Meanwhile, a labyrinth seal is better than a damper seal in that the amount of fluid leakage can be further reduced.

Incidentally, a rotary shaft of a rotary machine is supported by a bearing provided in a casing. However, when a force causing instability of a hydraulic fluid and generated by a sealing device or an impeller increases with respect to a damping force obtained by the bearing, an unstable vibration is generated and thus the rotary shaft rotates excentrically, The above-described unstable vibration is excited by the force causing the instability of the fluid in a circumferential direction.

In order to handle this problem, a conventional rotary machine reduces vibration of a rotary shaft by damping the vibration of the rotary shaft through a labyrinth seal, a damper seal, or the like.

### [Citation List]

### [Patent Literature]

[Patent Document 1]
Japanese Unexamined Patent Application, First Publication No. 2010-38114

### [Summary of Invention]

### [Technical Problem]

However, a force causing instability of a fluid increases as the pressure and density of a fluid flowing through a rotary machine increase. Consequently, vibration of a rotary shaft cannot be sufficiently damped only by a labyrinth seal or a damper seal used as a metal port seal or an intermediate stage seal. As a result, there is a concern that the vibration of the rotary shaft and an impeller provided in the rotary shaft may not be dumped.

Here, in order to improve the damping force, a structure which extends an area provided with the labyrinth seal or the damper seal in an axial direction of the rotary shaft is considered. However, when the labyrinth seal or the damper seal is elongated in the axial direction, the rotary machine is elongated in the axial direction. As a result, there is a concern that a deterioration in performance of the rotary machine may be induced.

An object of the present invention is to provide a rotary machine capable of effectively suppressing vibration of a rotary shaft and an impeller by sufficiently damping the vibration of the rotary shaft.

### [Solution to Problem]

In order to achieve the aforementioned objects, according to a first aspect of the present invention, there is provided a rotary machine including: a rotary shaft; an impeller that is fixed to the rotary shaft; and a casing that covers the rotary shaft and the impeller, wherein the impeller includes a disc-shaped disc portion, a plurality of blades that are provided at one face in an axial direction in which the rotary shaft of the disc portion extends such that the blades are separated from one another in a circumferential direction, a cover portion that faces the disc portion with a gap interposed therebetween and covers the plurality of blades from one of two sides in the axial direction, and wherein the casing includes a perforated face that faces the cover portion with a gap interposed therebetween, is provided at an inner peripheral side area in relation to a position corresponding to an outer peripheral side end of the cover portion, and is provided with a plurality of holes.

In this way, energy of a flow of a hydraulic fluid flowing between the cover portion of the impeller and the casing is reduced by the plurality of holes of the perforated face formed in the inner peripheral side area in relation to a position corresponding to the outer peripheral side end of the cover portion and facing the cover portion of the impeller in the casing.

According to a second aspect of the present invention, in the rotary machine of the first aspect, the perforated face may be a slope that is inclined with respect to a face orthogonal to the axial direction.

With such a configuration, a damping force applied from the hydraulic fluid to the rotary shaft in the perforated face acts in the axial direction of the rotary shaft and a direction orthogonal to the axial direction. Thus, vibration of the shaft and vibration of the impeller can be effectively dumped.

According to a third aspect of the present invention, in the rotary machine of the first or second aspect, the plurality of holes may be formed in a circular cross-section shape and may be adjacent to one another.

According to a fourth aspect of the present invention, in the rotary machine of the first or second aspect, the plurality of holes may be formed in a hexagonal cross-section shape and may be adjacent to one another.

With such a configuration, since the holes formed in the perforated face are formed in a circular or hexagonal cross-section shape, the holes can be easily formed by a drill or the like.

According to a fifth aspect of the present invention, in the rotary machine of any one of the first to fourth aspects, the holes may have a different depth in a circumferential direction about the rotary shaft.

With such a configuration, a different damping force can be exerted on the rotary shaft or the impeller in the circumferential direction.

According to a sixth aspect of the present invention, in the rotary machine of any one of the first to fifth aspects, the holes may have a different depth in a radial direction about the rotary shaft.

With such a configuration, even when the hydraulic fluid flowing through the rotary machine has a different pressure distribution in the radial direction, a damping force depending on generated vibration can be exerted on the rotary shaft or the impeller.

### [Advantageous Effects of Invention]

According to the rotary machine of the present invention, since the hydraulic fluid which flows between the cover portion of the impeller and the casing sufficiently damps the vibration of the rotary shaft, the vibration of the rotary shaft and the impeller can be effectively dumped.

### [Brief Description of Drawings]

Fig. 1 is a cross-sectional view showing a configuration of a centrifugal compressor that is an example of a rotary machine of an embodiment.
Fig. 2 is an enlarged cross-sectional view showing a main part of a centrifugal compressor of a first embodiment of a rotary machine.
Fig. 3 is a cross-sectional view showing a perforated face which is provided in an area facing a cover portion of an impeller in a casing.
Fig. 4 is a diagram showing a plurality of holes formed in a perforated face of the first embodiment.
Fig. 5 is an enlarged cross-sectional view showing a main part of a centrifugal compressor of a second embodiment of a rotary machine.
Fig. 6 is a diagram showing a plurality of holes formed in a perforated face of the second embodiment.
Fig. 7 is a cross-sectional view showing an example of a hole formed in a perforated face of a centrifugal compressor of a third embodiment of a rotary machine.
Fig. 8 is an enlarged cross-sectional view showing a main part of a centrifugal compressor of a fourth embodiment of a rotary machine.

### [Description of Embodiments]

Hereinafter, embodiments of a rotary machine according to the present invention will be described with reference to the drawings.

### (First Embodiment)

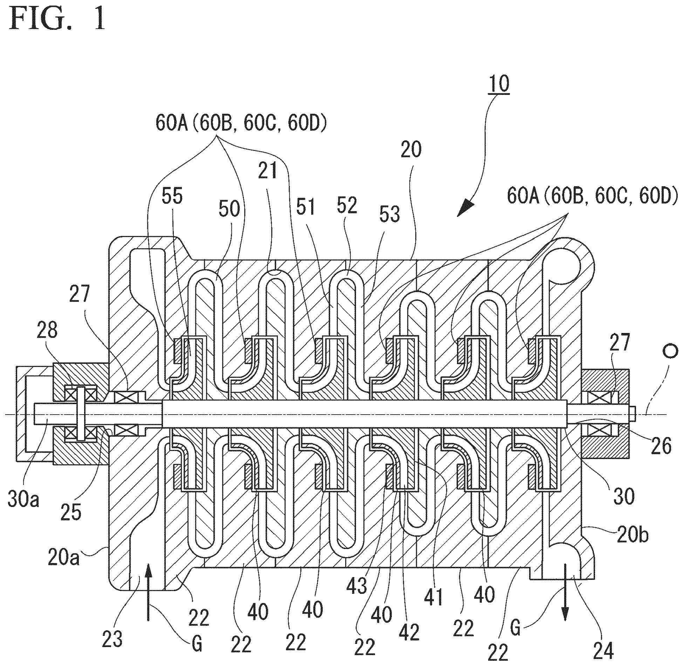

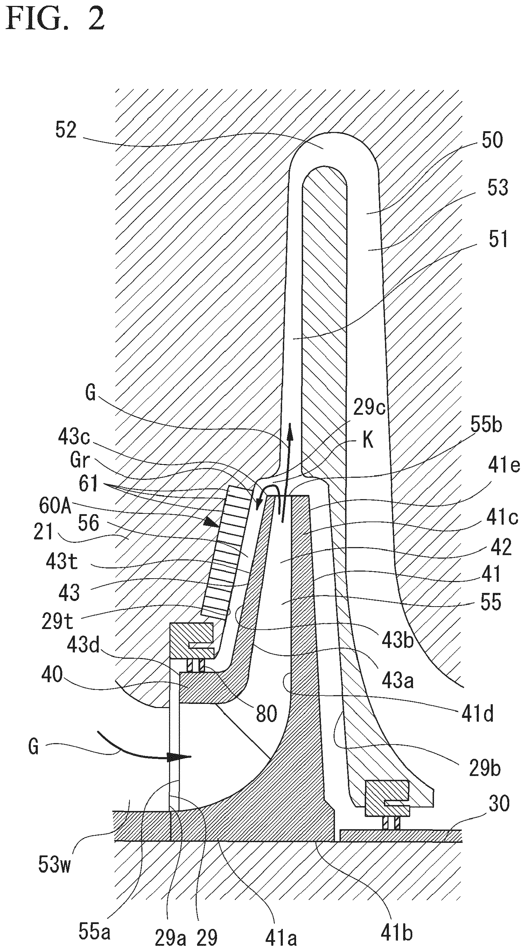

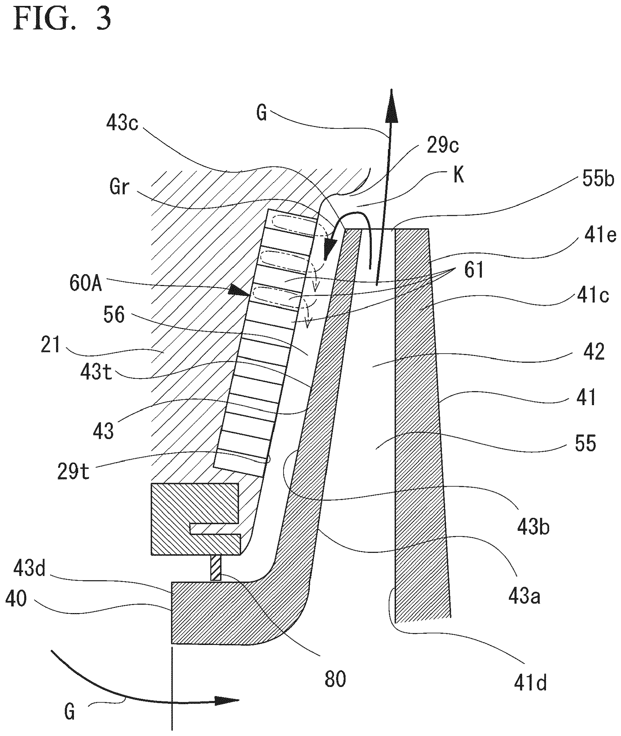

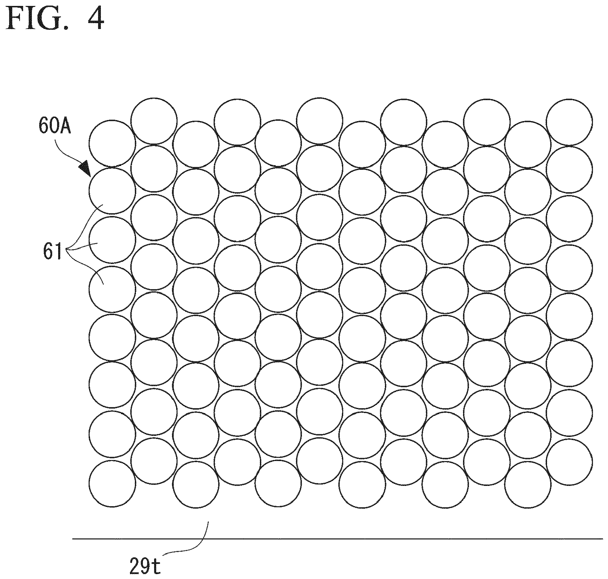

Fig. 1 is a cross-sectional view showing a configuration of a centrifugal compressor that is an example of a rotary machine of an embodiment. Fig. 2 is an enlarged cross-sectional view showing a main part of a centrifugal compressor. Fig. 3 is a cross-sectional view showing a perforated face which is provided in an area facing a cover portion of an impeller in a casing. Fig. 4 is a diagram showing a plurality of holes formed in a perforated face.

As shown in Fig. 1, a centrifugal compressor (a rotary machine) 10 that is a rotary machine of the embodiment mainly includes a casing 20, a rotary shaft 30, and impellers 40. The rotary shaft 30 is supported inside the casing 20 to be rotatable about a central axis O. The impellers 40 are attached to the rotary shaft 30 and compress a gas G which is a hydraulic fluid by using a centrifugal force.

The casing 20 has a configuration in which a plurality of ring members 22 are arranged in a direction of the central axis O corresponding to an axial direction in which the rotary shaft 30 extends. The casing 20 is provided with an inner space 21 which is repeatedly decreased and increased in diameter. The impellers 40 are accommodated in the inner space 21. A casing side passage 50 through which the gas G flowing through the impellers 40 flows from an upstream side toward a downstream side is formed at a position between the impellers 40 when the impellers 40 are accommodated in the casing.

A suction port 23 through which the gas G flows into the casing side passage 50 from the outside is provided at first end 20a which is first end of the casing 20 in the direction of the central axis O. A discharge port 24, which is contiguous with the casing side passage 50 and through which the gas G flows to the outside, is provided at the second end 20b which is the second end of the casing 20 in the direction of the central axis O.

The first end 20a and the second end 20b of the casing 20 are respectively provided with a support hole 25 and a support hole 26 which respectively support both ends of the rotary shaft 30. The rotary shaft 30 is supported by the support hole 25 and the support hole 26 to be rotatable about the central axis O through a journal bearing 27. The first end 20a of the casing 20 is provided with a thrust bearing 28. In the rotary shaft 30, the first end side 30a which is a first end in the direction of the central axis O is supported to be rotatable about the central axis O through the thrust bearing 28.

The impellers 40 are respectively accommodated inside ring members 22 of the casing 20 at intervals in the direction of the central axis O. Further, Fig. 1 shows an example of a case in which six impellers 40 are provided, but at least one or more impellers 40 may be provided.

As shown in Fig. 2, a concave portion 29a and a concave portion 29b which accommodate the impellers 40 are formed in the inner space 21 of the casing 20. The concave portion 29a and the concave portion 29b are respectively recessed toward the first end 20a (in Fig. 2, a left side) of the casing 20 and the second end 20b (in Fig. 2, a right side) of the casing 20. The casing 20 is provided with an impeller accommodating portion 29 which has a circular cross-section shape orthogonal to the central axis O and accommodates the impeller 40 by the concave portion 29a and the concave portion 29b.

Regarding the impeller 40 of the centrifugal compressor 10 of the embodiment, the impeller 40 including a disc portion 41, a blade portion 42, and a cover portion 43 is a closed impeller.

The disc portion 41 is formed in a disc shape. Specifically, the disc portion 41 of the embodiment is formed so that a central portion thereof is formed as a cylindrical portion 41a having a substantially cylindrical shape having a uniform length in the direction of the central axis O. The rotary shaft 30 is inserted and fixed into a through-hole 41b of the cylindrical portion 41a. A disc body 41c having a disc shape is integrally formed with an outer peripheral side of the cylindrical portion 41a. The disc body 41c increases in outer diameter from a first side toward a second side in the direction of the central axis O so that a face directed to the first side in the direction of the central axis O is formed as a concave curved face 41d. The second side of the disc body 41c in the direction of the central axis O is formed as a plane 41e which is separated from the concave portion 29b by a predetermined gap.

The concave curved face 41d is provided with a plurality of blade portions 42 which are separated from one another in a circumferential direction. The blade portions 42 are integrally formed to protrude from the concave curved face 41d toward the first side in the direction of the central axis O.

The cover portion 43 is formed to cover the plurality of blade portions 42 from the first side in the direction of the central axis O. The cover portion 43 is formed in a disc shape corresponding to the disc portion 41. The cover portion 43 is formed by a convex face 43a so that a side facing the concave curved face 41d is separated from the concave curved face 41d by a predetermined gap therebetween. The first side of the cover portion 43 in the direction of the central axis O is formed by a concave face 43b which is separated by a predetermined gap from the concave portion 29a provided with a face directed toward the second side in the direction of the central axis O of the impeller accommodating portion 29.

Here, the concave face 43b of the cover portion 43 is formed as a tapered cover face 43t which linearly increases in outer diameter in a radial direction as it goes from the first side toward the second side in the direction of the central axis O.

The concave portion 29a, which is provided near the casing 20 to face the cover portion 43 with a gap interposed therebetween, is provided with a tapered casing face 29t which is formed to be substantially parallel to the tapered cover face 43t.

The tapered casing face 29t is an area which faces the tapered cover face 43t. The tapered casing face 29t is formed to linearly increase in inner diameter in the radial direction as it goes from the first side toward the second side in the direction of the central axis O.

As shown in Fig. 1, the casing side passage 50 includes a diffuser portion 51, a bent return portion 52, and a return passage 53.

The diffuser portion 51 is formed to extend from an outer peripheral side of the impeller 40 toward the outer peripheral side.

The bent return portion 52 is formed to be contiguous with an outer peripheral portion of the diffuser portion 51. The bent return portion 52 is formed in a direction toward the inner peripheral side from the outer peripheral portion of the diffuser portion 51 toward the second end 20b of the casing 20 while being curved in a U-shape in a cross-sectional view.

The return passage 53 is formed from the bent return portion 52 toward an inner peripheral side. As shown in Fig. 2, an inner peripheral side end of the return passage 53 is provided with a curved portion 53w which is curved toward a central portion of the impeller 40 at a subsequent stage.

In each impeller 40, an impeller side passage 55 is formed between the concave curved face 41d of the disc portion 41 and the convex face 43a of the cover portion 43. In the impeller side passage 55, an end 55a which is directed toward the first side in the direction of the central axis O of each impeller 40 faces the curved portion 53w of the return passage 53. The end 55b which is located at the second side in the direction of the central axis O and is located at the opposite side to the impeller side passage 55 is directed toward the outer peripheral side. The end 55b is formed to face the diffuser portion 51 of the casing side passage 50.

In such a centrifugal compressor 10, the gas G which is introduced from the suction port 23 into the casing side passage 50 flows from the end 55a near the inside of the blade portion 42 in the radial direction of each impeller 40 rotating about the central axis O along with the rotary shaft 30 into the impeller side passage 55. The gas G which flows into the impeller side passage 55 flows outward toward the outer peripheral side from the end 55b near the outside of the blade portion 42 in the radial direction. A gap between the adjacent blade portions 42 in the circumferential direction is formed as a compression passage through which the gas G flows in the radial direction. When the gas G flows through the impeller side passage 55, the gas G is compressed.

The gas G which flows outward from the impeller 40 of each stage flows toward the outer peripheral side through the diffuser portion 51 of the casing side passage 50. Subsequently, the gas G is returned in a flow direction of the bent return portion 52 and is fed to the impeller 40 at a rear stage through the return passage 53. In this way, the gas G flows repeatedly through the casing side passage 50 and the impeller side passage 55 of each of the impellers 40 provided in multiple stages from the first end 20a of the casing 20 toward the second end 20b thereof. Accordingly, the gas G is compressed in multiple stages and is fed from the discharge port 24.

Incidentally, as shown in Figs. 2 and 3, in the centrifugal compressor 10, the gas G which flows into the impeller side passage 55 flows from the outer end 55b in the radial direction into the diffuser portion 51. At this time, a part of the gas G leaks from a metal port K which is a gap between an outer peripheral side end 43c of the cover portion 43 of the impeller 40 and a radial end 29c of the concave portion 29a of the impeller accommodating portion 29. A leakage gas Gr flows into a gap 56 between the convex face 43a of the cover portion 43 and the tapered casing face 29t of the impeller accommodating portion 29. The leakage gas Gr which flows into the gap 56 flows into a seal 80 near an inner peripheral side end 43d of the cover portion 43 of the impeller 40. That is, the amount of the gas G flowing into the casing side passage 50 and compressed by the impeller 40 is reduced by the leakage gas Gr flowing back through the gap 56, and thus the efficiency of the centrifugal compressor 10 is deteriorated.

Here, in the above-described centrifugal compressor 10, a perforated face 60A is formed in the concave portion 29a of the impeller accommodating portion 29 formed in the casing 20. The perforated face 60A is formed in the tapered casing face 29t which faces the tapered cover face 43t of the cover portion 43 of the impeller 40 with a gap interposed therebetween.

The perforated face 60A is a part of the tapered casing face 29t. The perforated face 60A is provided in an inner peripheral side area in relation to a position corresponding to the outer peripheral side end 43c of the cover portion 43. That is, the perforated face 60a is formed as a slope which is inclined with respect to a face extending in the radial direction orthogonal to the direction of the central axis O.

The perforated face 60A is provided with a plurality of holes 61 which are opened toward the opposite side of the tapered cover face 43t of the impeller 40. As shown in Fig. 4, theses holes 61 are formed in a substantially zigzag shape to be adjacent to one another. The plurality of holes 61 form a so-called hole pattern seal.

In the embodiment, these holes 61 are formed in a circular cross-section shape having substantially the same hole diameter. Each hole 61 is formed to have a constant depth in a direction orthogonal to the tapered cover face 43t of the impeller 40.

As shown in Fig. 3, in such a perforated face 60A, the leakage gas Gr which leaks from the metal port K corresponding to the gap between the outer peripheral side end 43c of the cover portion 43 of the impeller 40 and the radial end 29c of the impeller accommodating portion 29 flows into the gap 56, and a part of the leakage gas Gr flowing thereinto enters the plurality of holes 61 formed in the perforated face 60A.

According to the centrifugal compressor 10 of the above-described first embodiment, the perforated face 60A provided with the plurality of holes 61 is formed in the inner peripheral side area from a position facing the outer peripheral side end 43c of the cover portion 43 of the impeller 40 in the casing 20. Accordingly, the leakage gas Gr which flows between the cover portion 43 of the impeller 40 and the casing 20 flows into the plurality of holes 61. For that reason, it is possible to effectively suppress vibration of the rotary shaft 30 and the impeller 40 by sufficiently damping the vibration of the rotary shaft 30.

The amount of the leakage gas Gr which leaks from the metal port K into the gap 56 between the convex face 43a of the cover portion 43 and the tapered casing face 29t of the impeller accommodating portion 29 can be reduced by the perforated face 60A.

Since a circumferential speed of a flow of the leakage gas Gr flowing into the metal port K is reduced by the perforated face 60A, a swirl can be dumped.

The perforated face 60A is formed in the tapered casing face 29t which is inclined with respect to a face orthogonal to the axial direction of the rotary shaft 30. Accordingly, a damping force applied from the leakage gas Gr to the rotary shaft by the perforated face 60A acting on the rotary shaft 30 in the axial direction and the radial direction. Thus, the vibration of the rotary shaft 30 and the vibration of the impeller 40 can be effectively dumped.

Since the hole 61 is formed in a substantially circular cross-section shape, the hole 61 can be easily formed by a drill or the like.

### (Second Embodiment)

Next, a second embodiment of a centrifugal compressor which is an example of the rotary machine of the present invention will be described. In the second embodiment described below, since only a configuration of a perforated face is different from that of the first embodiment, the same reference numerals will be given to the same components as those of the first embodiment, and repetitive descriptions will be omitted.

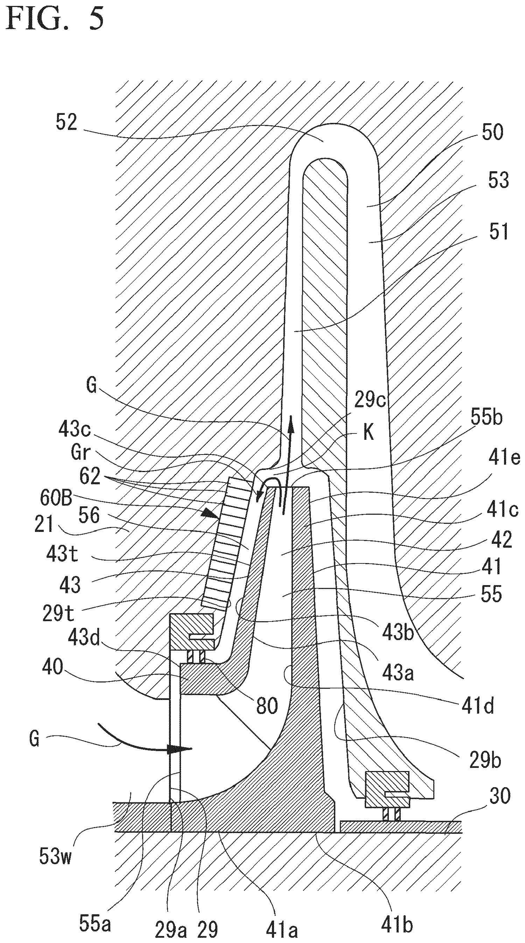

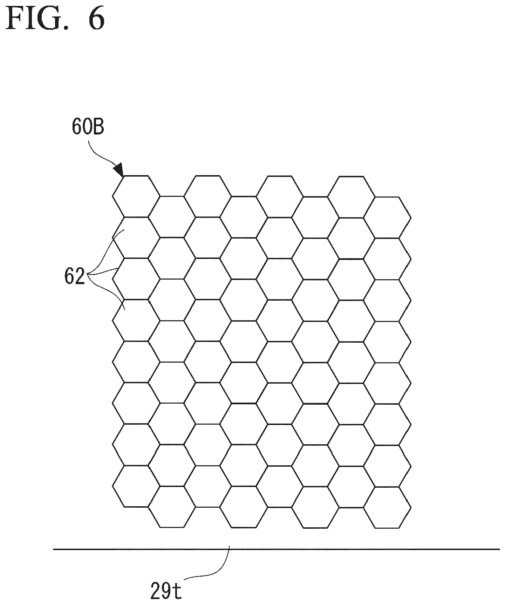

Fig. 5 is an enlarged cross-sectional view showing a main part of a centrifugal compressor of the second embodiment of a rotary machine. Fig. 6 is a diagram showing a plurality of holes formed in the perforated face.

As shown in Fig. 5, a centrifugal compressor 10 of the embodiment includes a casing 20, a rotary shaft 30, and an impeller 40.

In the centrifugal compressor 10, a perforated face 60B is formed in a concave portion 29a of an impeller accommodating portion 29 formed in the casing 20. The perforated face 60B is formed in a tapered casing face 29t facing a tapered cover face 43t of a cover portion 43 of the impeller 40.

The perforated face 60B is provided with a plurality of holes 62 which are opened toward an opposite side of the tapered cover face 43t of the impeller 40. Each hole 62 is formed in a hexagonal cross-section shape. These holes 62 are formed in a substantially zigzag shape to be adjacent to one another in an inner peripheral face 60f. The plurality of holes 62 form a so-called honeycomb seal.

In the embodiment, each hole 62 is formed to have a constant depth in a direction orthogonal to the tapered cover face 43t of the impeller 40.

In such a perforated face 60B, a leakage gas Gr which leaks from a metal port K of a gap between an outer peripheral side end 43c of the cover portion 43 of the impeller 40 and a radial end 29c of the impeller accommodating portion 29 flows into a gap 56. Apart of the leakage gas Gr which flows thereinto enters the plurality of holes 62 forming the perforated face 60B.

Thus, according to the configuration of the above-described second embodiment, the so-called honeycomb seal is formed in the perforated face 60B by the holes 62 having a hexagonal cross-section shape. Accordingly, similarly to the first embodiment, the leakage gas Gr which flows between the cover portion 43 of the impeller 40 and the casing 20 flows into the plurality of holes 62. Accordingly, it is possible to effectively suppress vibration of the rotary shaft 30 by sufficiently damping the vibration of the rotary shaft 30.

The amount of the leakage gas Gr which leaks from the metal port K into the gap 56 between the convex face 43a of the cover portion 43 and the tapered casing face 29t of the impeller accommodating portion 29 can be reduced by the perforated face 60B.

Since a circumferential speed of a flow of the leakage gas Gr flowing into the metal port K is reduced by the perforated face 60B, a swirl can be dumped.

Since the hole 61 is formed in a substantially hexagonal cross-section shape, the hole 61 can be easily formed by a drill or the like.

### (Third Embodiment)

Next, a third embodiment of a centrifugal compressor which is an example of the rotary machine of the present invention will be described. In the third embodiment described below, since only a configuration of a perforated face is different from that of the first embodiment, the same reference numerals will be given to the same components as those of the first embodiment and repetitive descriptions will be omitted.

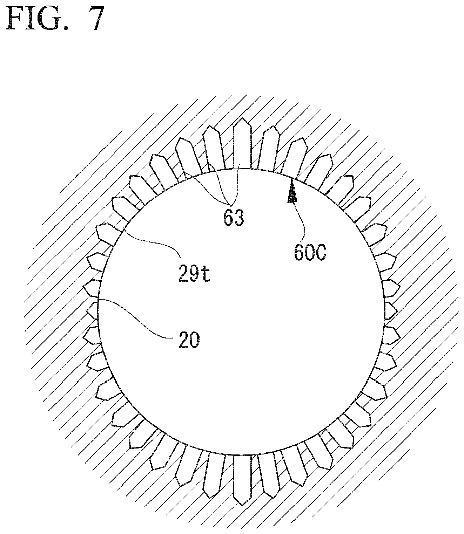

Fig. 7 is a cross-sectional view showing an example of a hole formed in a perforated face in a centrifugal compressor of the third embodiment of a rotary machine.

Similarly to the first embodiment, a centrifugal compressor 10 of the embodiment includes a casing 20, a rotary shaft 30, and an impeller 40 shown in Figs. 1 and 2.

In the centrifugal compressor 10, a perforated face 60C is formed in a concave portion 29a of an impeller accommodating portion 29 formed in the casing 20. The perforated face 60C is formed in a tapered casing face 29t which faces a tapered cover face 43t of a cover portion 43 of the impeller 40.

As shown in Fig. 7, the perforated face 60C is provided with a plurality of holes 63 which are opened toward an opposite side of the tapered cover face 43t of the impeller 40. These holes 63 are formed in a circular cross-section shape having substantially the same hole diameter and are formed in a direction orthogonal to the tapered cover face 43t of the impeller 40. Similarly to the first embodiment shown in Fig. 4, these holes 63 are disposed in a substantially zigzag shape to be adjacent to one another. The plurality of holes 63 form a so-called hole pattern seal.

In the embodiment, the holes 63 are formed to have a different hole depth in a circumferential direction about the rotary shaft 30.

In such a perforated face 60C, a leakage gas Gr which leaks from a metal port K of a gap between an outer peripheral side end 43c of the cover portion 43 of the impeller 40 and a radial end 29c of the impeller accommodating portion 29 flows into a gap 56. Apart of the leakage gas Gr which flows thereinto enters the plurality of holes 63 forming the perforated face 60C.

Thus, according to the configuration of the above-described third embodiment, similarly to the first embodiment, the leakage gas Gr which flows between the cover portion 43 of the impeller 40 and the casing 20 flows to the perforated face 60C. Accordingly, it is possible to effectively suppress vibration of the rotary shaft 30 by sufficiently damping the vibration of the rotary shaft 30.

The amount of the leakage gas Gr which leaks from the metal port K into the gap 56 between the convex face 43a of the cover portion 43 and the tapered casing face 29t of the impeller accommodating portion 29 can be reduced by the perforated face 60C.

Since a circumferential speed of a flow of the leakage gas Gr flowing into the metal port K is reduced by the perforated face 60C, a swirl can be dumped.

The perforated face 60C is formed to have a different hole depth in the circumferential direction about the rotary shaft 30. For that reason, a different damping force can be exerted on the rotary shaft 30 or the impeller 40 in the circumferential direction.

Further, in the above-described third embodiment, a distribution of the depth of the hole 63 shown in Fig. 7 is merely an example. Of course, the distribution may be set depending on an actual operational condition.

The hole 63 can be formed in a hexagonal cross-section shape similarly to the second embodiment.

### (Fourth Embodiment)

Next, a fourth embodiment of a centrifugal compressor which is an example of the rotary machine of the present invention will be described. In the fourth embodiment described below, since only a configuration of a perforated face is different from that of the first embodiment, the same reference numerals will be given to the same components as those of the first embodiment and repetitive descriptions will be omitted.

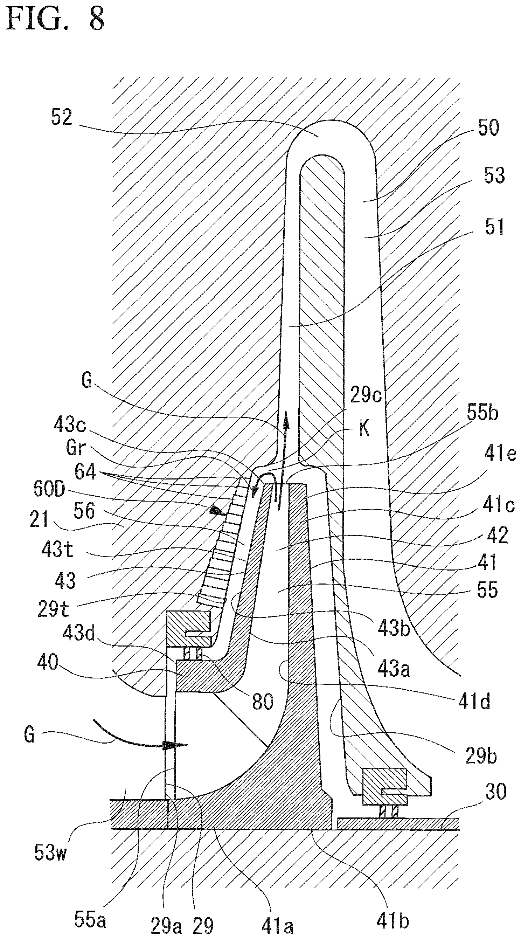

Fig. 8 is an enlarged cross-sectional view showing a main part of a centrifugal compressor of the fourth embodiment of a rotary machine.

As shown in Fig. 8, a centrifugal compressor 10 of the embodiment includes a casing 20, a rotary shaft 30, and an impeller 40.

In the centrifugal compressor 10, a perforated face 60D is formed in a concave portion 29a of an impeller accommodating portion 29 formed in the casing 20. The perforated face 60D is formed in a tapered casing face 29t which faces a tapered cover face 43t of a cover portion 43 of the impeller 40.

The perforated face 60D is provided with a plurality of holes 64 which are opened toward an opposite side of the tapered cover face 43t of the impeller 40. The holes 64 are formed in a circular cross-section shape having substantially the same hole diameter and are formed in a direction orthogonal to the tapered cover face 43t of the impeller 40. These holes 64 are disposed in a substantially zigzag shape to be adjacent to one another. The plurality of holes 64 form a so-called hole pattern seal.

In the embodiment, the holes 64 are formed to have a different hole depth in a radial direction about the rotary shaft 30. Specifically, a pressure distribution of a leakage gas Gr leaking from a metal port K in a gap 56 is examined, and a hole depth of each hole 64 in the radial direction is set depending on the pressure distribution. In the embodiment, for example, the hole depth of the hole 64 is formed to be gradually decreased from an inner peripheral side in the radial direction toward an outer peripheral side in the radial direction.

In such a perforated face 60D, the leakage gas Gr which leaks from the metal port K of the gap between an outer peripheral side end 43c of the cover portion 43 of the impeller 40 and a radial end 29c of the impeller accommodating portion 29 flows into the gap 56. Apart of the leakage gas Gr which flows thereinto enters the plurality of holes 64 forming the perforated face 60C.

Thus, according to the configuration of the above-described fourth embodiment, similarly to the first embodiment, the leakage gas Gr which flows between the cover portion 43 of the impeller 40 and the casing 20 flows into the plurality of holes 64. Accordingly, it is possible to effectively suppress vibration of the rotary shaft 30 by sufficiently damping the vibration of the rotary shaft 30.

The amount of the leakage gas Gr which leaks from the metal port K into the gap 56 between the convex face 43a of the cover portion 43 and the tapered casing face 29t of the impeller accommodating portion 29 can be reduced by the perforated face 60D.

Since a circumferential speed of a flow of the leakage gas Gr flowing into the metal port K is reduced by the perforated face 60D, a swirl can be dumped.

The perforated face 60C is formed so that the holes 64 have a different hole depth in the radial direction about the rotary shaft 30. For that reason, a different damping force can be exerted on the rotary shaft 30 or the impeller 40 in the radial direction. Thus, for example, a damping force is obtained depending on the hole depth and the pressure distribution of the leakage gas Gr which leaks from the metal port K of the gap 56, and thus a damping force depending on generated vibration can be exerted.

Further, in the above-described fourth embodiment, a distribution of the depth of the hole 64 shown in Fig. 8 is merely an example. The distribution may certainly be set depending on an actual pressure distribution.

The hole 64 can be formed in a hexagonal cross-section shape similarly to the second embodiment.

### (Other Modified Examples)

Further, the present invention is not limited to the above-described embodiments and includes various modifications of the above-described embodiments within the scope of the present invention. That is, a detailed shape or configuration exemplified in the embodiment is merely an example and can be appropriately modified.

For example, the perforated faces 60A, 60B, 60C, and 60D may be formed in such a manner that an annular member is formed separately from the casing 20, and this member is provided in the tapered casing face 29t of the impeller accommodating portion 29 formed in the casing 20.

The perforated faces 60A, 60B, 60C, and 60D are formed in the tapered casing face 29t, but may be provided in a face orthogonal to the central axis of the rotary shaft 30 in the casing 20.

Additionally, for example, an entire configuration of the centrifugal compressor 10 may be arbitrarily set.

### [Industrial Applicability]

According to the above-described rotary machine, since the hydraulic fluid which flows between the casing and the cover portion of the impeller sufficiently damps the vibration of the rotary shaft, it is possible to effectively suppress vibration of the rotary shaft and the impeller.

### [Reference Signs List]

- 10: Centrifugal compressor (rotary machine)
- 20: Casing
- 20a: First end
- 20b: Second end
- 21: Inner space
- 22: Ring member
- 23: Suction port
- 24: Discharge port
- 25, 26: Support hole
- 27: Journal bearing
- 28: Thrust bearing
- 29: Impeller accommodating portion
- 29a, 29b: Concave portion
- 29c: Radial end
- 29t: Tapered casing face
- 30: Rotary shaft
- 30a: First end side
- 40: Impeller
- 41: Disc portion
- 41b: Through-hole
- 41c: Disc body
- 41d: Concave curved face
- 41e: Plane
- 42: Blade portion
- 43: Cover portion
- 43a: Convex face
- 43b: Concave face
- 43c: Outer peripheral side end
- 43d: Inner peripheral side end
- 43t: Tapered cover face
- 50: Casing side passage
- 51: Diffuser portion
- 52: Bent return portion
- 53: Return passage
- 53w: Curved portion
- 55: Impeller side passage
- 55a: End
- 55b: End
- 56: Gap
- 60A to 60D: Perforated face
- 60f: Inner peripheral face
- 61 to 64: Hole
- G: Gas
- Gr: Leakage gas
- K: Metal port

## Claims

1. A rotary machine comprising:
a rotary shaft;
an impeller that is fixed to the rotary shaft; and
a casing that covers the rotary shaft and the impeller, wherein
the impeller includes a disc-shaped disc portion, a plurality of blades that are provided at one face in an axial direction in which the rotary shaft of the disc portion extends such that the blades are separated from one another in a circumferential direction, a cover portion that faces the disc portion with a gap interposed therebetween and covers the plurality of blades from one of two sides in the axial direction, and
the casing includes a perforated face that faces the cover portion with a gap interposed therebetween, is provided at an inner peripheral side area in relation to a position corresponding to an outer peripheral side end of the cover portion, and is provided with a plurality of holes.

2. The rotary machine according to claim 1, wherein
the perforated face is a slope that is inclined with respect to a face orthogonal to the axial direction.

3. The rotary machine according to claim 1 or 2, wherein
the plurality of holes are formed in a circular cross-section shape and are adjacent to one another.

4. The rotary machine according to claim 1 or 2, wherein
the plurality of holes are formed in a hexagonal cross-section shape and are adjacent to one another.

5. The rotary machine according to any one of claims 1 to 4, wherein
the holes have a different depth in a circumferential direction about the rotary shaft.

6. The rotary machine according to any one of claims 1 to 5, wherein
the holes have a different depth in a radial direction about the rotary shaft.
